# EUROPÄISCHE PATENTSCHRIFT

(11) **EP 0 575 751 B1**
(45) Veröffentlichungstag und Bekanntmachung des Hinweises auf die Patenterteilung: **01.10.1997**
(21) Anmeldenummer: 93108142.6
(22) Anmeldetag: 19.05.1993
(51) Int. Cl.: B29B 17/02

(54) **Verfahren zur Wiedergewinnung des Kunststoffes aus lackierten Kunststoffteilen**
Method for recovering plastics departing from lacquered scrap parts
Procédé pour la récupération des plastiques provenant des parties déchets laquées

(30) Priorität: 22.05.1992 DE 4217005
(43) Veröffentlichungstag der Anmeldung: 29.12.1993
(73) Patentinhaber: MONTELL NORTH AMERICA INC., New Castle County Delaware (US)
(72) Erfinder: Preiss, Joachim, W-8581 Goldkronach (DE)
(74) Vertreter: Luderschmidt & Partner

(56) Entgegenhaltungen:
- EP-A- 0 542 593
- DE-A- 4 106 812
- US-A- 4 199 109
- MODERN PLASTICS INTERNATIONAL Bd. 23, Nr. 2, Februar 1993, LAUSANNE CH Seiten 13 - 14 STEPHEN MOORE 'JAPANESE SHOW BUMPER RECYCLING TO GERMANS'
- PATENT ABSTRACTS OF JAPAN vol. 6, no. 181 (M-156)(1059) 17. September 1982 & JP-A-57 089 924 (KIKUCHI KASEI K.K.) 4.Juni 1982
- PLASTVERARBEITER Bd. 42, Nr. 7, Juli 1991, SPEYER, DE. Seiten 48 - 52 BRUNO RAPP 'WIEDERWERVERTUNG VON LACKIERTEN PP-EPDM-STOSSFÄNGERN'

## Beschreibung

Die Erfindung betrifft ein Verfahren zur Wiedergewinnung des Kunststoffes aus lackierten Kunststoffteilen, die insbesondere aus dem Automobilbau stammen.

Kunststoffteile im Kfz-Bereich können aus einer Vielfalt verschiedenster Polymerisate gefertigt sein. Häufig handelt es sich jedoch um binäre oder ternäre thermoplastische Formmassen, bevorzugt auf Polypropylenbasis oder auch, allerdings weitaus seltener, auf Polyethylenbasis. Zu den Einsatzgebieten solcher Formmassen zählen u.a. Radhausauskleidungen, Kofferraumauskleidungen, Batterieabdeckungen, Batteriekästen, Seitenbeplankungen, Stoßfänger etc. Aus der Praxis sind nun verschiedene verfahren bekannt, Recyclate aus Formteilen, die zu einem wesentlichen Teil aus thermoplastischen Massen bestehen, herzustellen.

Ein in der Praxis bekanntes verfahren befaßt sich beispielsweise mit der Aufbereitung von lackierten Stoßfängern. Stoßfänger bestehen im wesentlichen aus elastomermodifiziertem Polypropylen, wobei zur Modifikation als Kautschukkomponente vielfach Polyethylen-Polypropylen-Mischpolymerisate (EPM) und/oder Polyethylen-Polypropylen-Dien-Mischpolymerisate (EPDM) verwendet werden. Zusätzlich kann eine ganze Reihe von Additiven zur gezielten Eigenschaftsbeeinflussung in der binären bzw. ternären Kunststofformmasse mitverarbeitet sein.

Bei einem bekannten Recyclingverfahren werden nun unlackierte gebrauchte Stoßfänger zunächst demontiert und dann mittels dem Fachmann geläufiger Grobschneidmühlen inklusive aller Fremdstoffe wie Lampen, Halterungen, Stahlträger etc. zu handtellergroßen Chips vorgeshreddert. Diese Stücke werden dann durch Naßmahlen unter hohem Druck zu einem sauberen feinen Mahlgut zerkleinert. Das Feinmahlgut wird homogenisiert, nach Analyse entsprechend dem angestrebtem Verwendungszweck mit Additiven aufstabilisiert und schließlich mit beispielsweise Batteriekastenmahlgut aus Polypropylencopolymerisat ca. im Verhältnis 1:5 bis 1:6 verschnitten. Dies ergibt ein Recyclat, das entsprechend seinen Eigenschaften insbesondere aufgrund einer mangelnden Schlagzähigkeit bei tiefen Temperaturen sowie einer mangelnden Kerbschlagzähigkeit sowohl bei Raumtemperatur als auch bei tieferen Temperaturen nicht mehr zu oder in neuen Stoßfängern verarbeitbar ist, aber einem geringerwertigen Einsatzzweck, beispielsweise in Radhausauskleidungen, zugeführt werden kann. Für diese Anwendung ist eine geringe Schlagzähigkeit geradezu erwünscht. Problematisch beim angesprochenen Verfahren bleiben allerdings das Aussehen und der unangenehme Geruch des Recyclates, wobei letzterer insbesondere durch Schwefelanteile aus dem Batteriekastenmahlgut verursacht werden dürfte.

Besonders schwierig ist die Aufbereitung von lackierten Kunststoffteilen, beispielsweise von lackierten Stoßfängern. Viele Formteile werden aus optischen Gründen oder auch zu Schutzzwecken mit einem Lack auf Basis von Polyurethan oder Acrylat überzogen. Zur Erzeugung einer ausreichenden Haftung zwischen Lack und der im allgemeinen unpolaren Oberfläche des Formteils müssen die Oberflächen der Kunststoffteile vorbehandelt werden, etwa mit einem Primer, durch Beflämmen, Ätzen etc.. Hierbei ist das Beflämmen bei den Formteilen am weitaus häufigsten. Teilweise läßt sich - auch mit selten angewendeten speziellen Methoden wie Plasma- oder Coronabehandlung - ein Verbund mit Haftungen zwischen Lackschicht und Formteil erzeugen, welcher Löseversuchen mit allen gängigen Lösemitteln ebenso glatt widersteht wie auch etwaigen Sandstrahl- oder Flammbehandlungen.

Im allgemeinen sind Recyclate aus lackierten Kunststoffteilen mit einem relativ hohen Gehalt an Lackresten in wichtigen Eigenschaften den Recylaten aus nicht-lackierten Formteilen deutlich unterlegen. Beispielsweise ergeben lackierte Stoßfänger, die in Analogie zum vorbeschriebenen Verfahren für unlackierte Formteile aufbereitet werden, Recyclate und wiederum daraus herstellbare Formteile mit Oberflächenstörungen, die insbesondere beim erneuten Lackieren stören. Sie weisen zudem einen Abfall in der Reißdehnung sowie einen Abfall in der Schlagzähigkeit bzw. Kälteschlagzähigkeit auf und verfügen somit insgesamt nur über ein Eigenschaftsspektrum, das hinter den heute üblichen Anforderungen deutlich zurückbleibt.

Es wurde nun u.a. versucht (Plastverarbeiter, 42, Seiten 48 ff., 1991), aus lackierten Stoßfängern in einem mehrstufigen Mahlvorgang ein Recyclat zu gewinnen, das über akzeptable mechanische Eigenschaften auch bei tieferen Temperaturen verfügt. Zu diesem Zweck wurde in Testversuchen aus Produktionsabfällen lackierter Stoßfänger in einem ersten Mahlvorgang ein erstes Mahlgut von 6 bis 12 mm Körnung hergestellt. Das Grobmahlgut wird in einer Mikrowirbelschichtmühle in einer zweiten Mahlung zu einer Korngröße von 300 bis 500 µm zerkleinert. Das mechanische Eigenschaftsniveau von Feinmahlgut wird im Vergleich zu Grobmahlgut aus lackierten Stoßfängern zwar deutlich angehoben, doch weichen die Schädigungskraft, die Verformung und die Arbeit im elektronischen Durchstoß nach DIN 53 443/2 bei -30°C immer noch klar zu schlechteren Werten hin ab. Das Feinmahlgut besteht entweder aus frei nebeneinander vorliegenden sehr feinen Lack- und Kunststoffpartikeln und/oder aus feinen Kunststoffpartikeln, denen Lackreste anhaften. Erst durch Zugabe eines zur Einbindung des frei vorliegenden Lackmaterials im Kunststoffmaterial geeigneten Haftvermittlers in einer ausreichenden Menge von ca. 1 % zum Feinmahlgut werden auch die vorgenannten Eigenschaften annähernd auf das Niveau von Grobmahlgut aus unlackierten Stoßfängern angehoben. Es bleibt jedoch immer noch ein merklicher Eigenschaftsabfall zurück, so daß in der Regel ohne weitergehende Lackabtrennung lediglich eine geringerwertige Verwendung des Recyclats in Frage kommen dürfte.

Nach dem Feinmahlen des lackierten Mahlgutes wird nun zur weiteren Qualitätsverbesserung das Extrudieren, Entgasen und Sieben der Polypropylenschmelze, sowie zur Weiterverwendung des ausgesiebten Gutes ein Granulieren der thermoplastischen Formmasse vorgeschlagen. Beim Aussieben der Schmelze bzw. bei der sog. Schmelzefiltration wird das aufgeschmolzene Feinmahlgut beim Extrudiervorgang durch eine Lochplatte bzw. ein Paket von Siebplatteneinsätzen gepreßt. Aufgrund der annähernd staubfeinen Körnung der Lackpartikel sind auch sehr feine Siebeinsätze (zum Beispiel 500 µm, 250 µm etc.) erforderlich. Um den dadurch entstehenden Flußwiderstand zu überwinden ist nachteilig eine zusätzliche Schmelzpumpe notwendig, die den Schmelzfiltrationsprozeß verteuert. Es sind zwar zum Aussieben der Lackpartikel aus der Schmelze bislang keine genaueren Versuchsergebnisse verfügbar, es ist jedoch zu erwarten, daß bei einer zur hinreichenden Lackentfernung geeigneten Dimensionierung eines solchen Siebextruders der Durchsatz relativ niedrig sein dürfte, so daß der hohe Energieaufwand zur Schmelze der Recyclate wirtschaftlich nicht zu rechtfertigen sein wird.

Des weiteren hat man auch anderweitig versucht, die den Formteilen anhaftende Lackschicht ebenfalls in einer mehrstufigen Vermahlung durch Einsatz von Kältemitteln abzulösen. Durch ein Abkühlen des Mahlgutes auf sehr tiefe Temperaturen kommt es zu einer Versprödung des Polypropylens, was beim weiteren Zerkleinern eine Herabsetzung der Lackhaftung und schließlich ein Abplatzen der Lackpartikel zur Folge hat. Dieser Vorschlag führt zwar im Ergebnis zu einer recht hohen Lackabtrennung, der erforderliche hohe Kühlaufwand jedoch macht das Verfahren unwirtschaftlich.

Bezüglich der Vertragsstaaten BE, DE, ES, FR, GB, IT, NL, SE gilt als nächstliegender Stand der Technik die nicht vorveröffentlichte EP-A-0 542 593. Aus dieser Patentschrift ist ein Verfahren zur Wiedergewinnung des Kunststoffes aus lackierten Kunststoffteilen, die insbesondere aus dem Automobilbau stammen, bekannt, wobei auf zerkleinerte Partikel ein "compression impact" ausgeübt wird.

Angesichts der dargelegten Problematik ist es mithin Aufgabe der Erfindung, ein Verfahren zur Herstellung eines von wesentlichen Lackrückständen befreiten Kunststoffrecyclingprodukts aus lackierten Kunststoffteilen anzugeben, das besonders wirksam die Lackentfernung zuläßt und das weniger aufwendig und damit wirtschaftlicher als bekannte Verfahren arbeitet. Eine weitere Aufgabe besteht in der Schaffung eines Recyclats aus lackierten Kunststoffprodukten, insbesondere auf Basis polypropylenhaltiger thermoplastischer Formmassen, dessen Eigenschaften möglichst nahe beim Regenerat liegen und das somit wiederum für hochwertige Einsatzzwecke geeignet ist.

Bezüglich der Vertragsstaaten AT, CH, LI, PT werden diese und weitere Aufgaben durch ein Verfahren zur Wiedergewinnung des Kunststoffes aus lackierten Kunststoffteilen gelöst, bei dem die lackierten Kunststoffteile zu groben Partikeln zerkleinert werden, die groben Partikel fein zerkleinert und während der feinen Zerkleinerung einer simultanen Streck- und Scherbeanspruchung ausgesetzt werden, wobei durch die Verformung der Kunststoffpartikel der anhaftende Lack losgelöst wird, wonach die resultierenden Kunststoff- und Lackpartikel separiert werden.

Bezüglich der Vertragsstaaten BE, DE, ES, FR, GB, IT, NL, SE werden diese und weitere Aufgaben durch ein Verfahren zur Wiedergewinnung des Kunststoffes aus lackierten Kunststoffteilen gelöst, bei dem die lackierten Kunststoffteile zu groben Partikeln zerkleinert werden, die groben Partikel zerfasernd fein zerkleinert und während der feinen Zerkleinerung einer simultanen Streck- und Scherbeanspruchung ausgesetzt werden, wobei durch die Verformung der Kunststoffpartikel der anhaftende Lack losgelöst wird, wonach die resultierenden fein zerkleinerten Kuststoffasern und Lackpartikel einer Separation in einer Schwimm-Sink-Anlage oder einem Hydrozyklon unterzogen werden.

Die Lösung des der Erfindung zugrundeliegenden Problems gelingt dadurch, daß die lackierten Kunststoffteile in einem mehrstufigen Zerkleinerungsprozeß von den anhaftenden Lackpartikeln befreit werden, so daß schließlich im wesentlichen lackfreie Kunststoffrecyclingprodukte erhalten werden, die dann anschließend ohne besonders starke Qualitätseinbußen hinnehmen zu müssen, zu lackierten oder unlackierten Produkten weiterverarbeitet werden können.

Aus einem Recyclat, welches im erfindungsgemäßen Verfahren erhältlich ist, gefertigte Platten haben im Laborversuch gezeigt, daß es möglich ist, Teile herzustellen, die sowohl in der Lackhaftung - hier insbesondere im dem dem Fachmann geläufigen Klimawechseltest - als auch in den mechanischen Eigenschaften - ermittelt an den lackierten Platten - im Vergleich zur Neuware keine wesentlichen Qualitätseinbußen zeigen.

Erfindungsgemäß wird insbesondere in einem Verfahrensschritt die Zerkleinerung der lackierten Kunststoffteile mit einer starken Streck-Scher-Beanspruchung der zu zerkleinernden Partikel verknüpft, in welcher Streck-Scher-Behandlung die noch lackierten Partikel solch hohen Dehnungen und Scherkräften ausgesetzt sind, daß die Lackschicht von den lackierten Kunststoffpartikeln abplatzt. Im Gegensatz zum Verfahren gemäß dem Stand der Technik wird das Mahlgut hierbei nicht pulverfein aufgemahlen, um die erwünschte hohe Lackablösung zu erhalten. Vielmehr werden die groben Partikel beim Feinzerkleinern erfindungsgemäß so deformiert bzw. gedrellt, insbesondere gedehnt, daß die Lackteilchen, die an den groben Partikeln von Kunststoff anhaften, absplittern bzw. abgeschält werden. Aufgrund der Größe der absplitternden Partikel, die deutlich oberhalb der gemäß dem Stand der Technik bekannten feinen Pulvergröße liegt, gestaltet sich die anschließende Trennung einfacher, was die Wiederaufarbeitung effizienter und wirtschaftlicher durchführbar macht.

Das erfindungsgemäße Verfahren verknüpft vorteilhaft eine Reihe von Verfahrensschritten, insbesondere Zerkleinerungsschritten, zur Herstellung eines recycelten Kunststoffprodukts. Nacheinander werden die üblicherweise vorgeshredderten lackierten Formteile aus Kunststoff zunächst in einer Grobzerkleinerungsstufe zu groben Partikeln zerkleinert. Die groben Partikel werden dann während einer sich anschließenden Feinzerkleinerungsstufe gleichzeitig mit der Feinzerkleinerung zur Loslösung des anhaftenden Lackes einer Streck-Scher-Behandlung unterzogen, so daß im Effekt ein wesentlicher Anteil des an den Kunststoffpartikeln anhaftenden Lackes abplatzt. Danach werden die resultierenden Kunststoffpartikel von den freigesetzten Lackpartikeln in einer Separationsstufe abgetrennt. Schließlich wird in einer sich anschließenden Konfektionierstufe aus dem von den Lackteilchen abgetrennten Kunststoffprodukt ein im wesentlichen lackfreies aufbereitetes Kunststoffprodukt erhalten. Zwischen den einzelnen Zerkleinerungsschritten kann es außerdem immer wieder von Vorteil sein, zusätzliche Trenn- und Reinigungsoperationen durchzuführen.

Ausgehend von recht sperrigen lackierten Kunststoffteilen ist es vorteilhaft, diese Ausgangsmaterialien für das Recyclingverfahren zunächst grob zu zerkleinern. Dabei ist es zweckmäßig, die lackierten Kunststoffteile auf eine mittlere Partikelgröße von 4 bis 12 mm zu bringen. Vorzugsweise wird die Größe der Formteile gleich im ersten Grobzerkleinerungsdurchgang auf einen Betrag von ca. 6 bis 8 mm reduziert. Es können auch mehrere Grobzerkleinerungsvorgänge aufeinanderfolgen, um die gewünschte Körnung des Materials zu erreichen, beispielsweise aus Kapazitätsgründen der Grobzerkleinerungsanlage.

Als Aggregat für die Grobzerkleinerung der Kunststofformteile kommen im Prinzip alle im Stand der Technik enthaltenen, dem Fachmann geläufigen Aggregate in Frage. Bevorzugt ist es jedoch, daß die Formteile nicht zuviel der beim Zerkleinerungsvorgang aufzuwendenden Energie absorbieren, um so eine mögliche, starke Erwärmung des Materials und sein unerwünschtes Schmelzen zu verhindern. Gut geeignet für den Grobzerkleinerungsschritt sind Aggregate, welche die Kunststofformteile schneidend bearbeiten, etwa Mahlen. Besonders bevorzugt sind hierfür an sich bekannte Schneidmühlen.

Die Zerkleinerung in der ersten Stufe kann entweder trocken oder naß vorgenommen werden. In der Regel ist es jedoch bevorzugt, aus den vorerwähnten Gründen zur Verringerung der Energieaufnahme der Kunststoffteile während des Zerkleinerns, zur groben Zerkleinerung der lackierten Kunststoffteile dem Zerkleinerungsaggregat zur Kühlung Wasser zuzusetzen, so daß naß aufgemahlen wird. Gegebenenfalls können sich an das Grobnaßmahlen weitere Trenn-, Reinigungs- und Trockenoperationen anschließen.

Prinzipiell kann man eine Grobzerkleinerung wie vorbeschrieben durchführen. Es ist jedoch bevorzugt, daß die sperrigen lackierten Kunststoffteile samt gegebenenfalls metallischen Anteilen vor dem groben Zerkleinern in einer Shredder-Schneidmühle zu ungefähr handtellergroßen Chips vorgeshreddert werden. Diese Stücke werden dann weiterhin bevorzugt einer Grobtrennung zur Abtrennung einer gegebenenfalls anfallenden metallischen Fraktion unterzogen. Die Grobtrennung kann beispielsweise mittels Wasser durchgeführt werden, in welchem aufgrund der Dichteunterschiede überwiegend metallische Anteile als Sinkfraktion abgeschieden werden können, während die hauptsächlich kunststoffhaltige Schwimmfraktion mit einer Förderschnecke abgezogen werden kann.

Als Ergebnis der Grobzerkleinerungsstufe erhält man mithin ein partikelförmiges Kunststoffprodukt von einer Körnung von zwischen 4 und 12 mm, an dem noch im wesentlichen alle ursprünglich vorhandenen Lackpartikel relativ fest anhaften.

Das erhaltene grobe Partikelmaterial mit anhaftenden Lack wird nun erfindungsgemäß in einer Feinzerkleinerungsstufe einer bevorzugt zerfasernden Zerkleinerung unterzogen, bei der gleichzeitig erhebliche Deformations- und Scherkräfte auf die Kunststoffpartikel ausgeübt werden. Dazu wird das Partikelmaterial aus dem Aggregat der Grobzerkleinerungsstufe, bevorzugt nach weiteren Reinigungs-, Trenn- und Trocknungsschriftten, in das Zerkleinerungsaggregat der Feinzerkleinerungsstufe überführt. Hier wird vorteilhaft das Kunststoffmaterial der ersten Grobzerkleinerung feinzerkleinert, so daß in besonders zweckmäßiger Ausführungsform ein Kunststoffasermaterial von 0,5 bis 6 mm Länge und 0,005 bis 0,5 mm Faserdicke bzw. Faserdurchmesser, bevorzugt von 1 bis 3 mm Länge und ca. 0,1 mm Faserdicke, erhalten wird. Dabei entstehen im allgemeinen keine regelmäßigen Fasern. Vielmehr handelt es sich um abgerissene oder zerrissene Kunststoffasern, die eine eher unregelmäßige Gestalt aufweisen, die sich aber bevorzugt durch ein Verhältnis der Länge zum Durchmesser der Fasern gleich L/D von ca. 30 auszeichnen.

Die Feinzerkleinerung soll im wesentlichen drei Aufgaben erfüllen. Zunächst kann es zu einer weiteren Zerkleinerung der groben Partikel kommen, wobei die Zerkleinerung im wesentlichen auf einem Zerreißen der groben Partikel oder auch auf einem Abreißen von kleineren Teilchen von größeren Partikeln in einem mahlartigen Vorgang beruht. Im Gegensatz zur ersten Zerkleinerungsstufe ist eine gegebenenfalls stattfindende schneidende Zerkleinerung lediglich von nachgeordneter Bedeutung. Erfindungsgemäß ist hingegen in der Feinzerkleinerungsstufe die Zerfaserung des Kunststoffmaterials wesentlich. Wie an den oben angegebenen Größen der Kunststoffasern ablesbar ist, wird im Rahmen der Erfindung durch die zerfasernde Mahlung der groben Kunststoffpartikel - vornehmlich von globulären Partikeln - eine Abnahme der Dicke des Materials bevorzugt, wohingegen die Länge der Partikel weniger starken Abnahmen unterworfen ist.

Die vorbeschriebene feine Zerkleinerung der groben Kunststoffpartikel wird in einer bevorzugten Ausführungsform des erfindungsgemäßen Verfahrens dadurch bewirkt, daß die groben Partikel zur feinen Zerkleinerung den Spalt zwischen einer rotierenden und einer feststehenden Mahlscheibe eines Mahlaggregats, das gleichzeitig zur Erzeugung ausreichender Scherkräfte ausgebildet ist, passieren. Beim Durchlaufen des Spaltes werden die Partikel in Richtung des Austrages weiterbewegt und dabei deformiert, gleichsam gewalkt, wobei die Größe der aus dem Mahlaggregat ausgetragenen Partikel durch den Spaltabstand zwischen der rotierenden und der feststehenden Mahlscheibe bestimmt ist. Teilchen, die zu groß für den Spalt sind, werden aufgrund der hohen auftretenden Kräfte zerrissen, so daß sie durch den Spalt passen.

Erfindungsgemäß werden die groben Partikel bevorzugt zerfasert, während sie einen sich verjüngenden Spalt zwischen zwei Mahlscheiben mit Sägezahnprofil passieren. Dies unterstützt besonders vorteilhaft das Abreißen bzw. Auseinanderreißen der Kunststoffpartikel. Gröbere Teilchen werden in einem Spaltbereich mit weiterem Abstand erfaßt und in Richtung Austrag weiterbewegt. Aufgrund der hohen Kräfte und des sich in Richtung Austrag verjüngenden Spalts werden die Teilchen zerrissen, aber gleichzeitig wird aufgrund der vor dem Reißen eintretenden Deformation, welche im wesentlichen einer Dehnung bzw. Streckung der Kunststoffpartikel entspricht, auch noch die dritte Aufgabe der Feinzerkleinerungsstufe erfüllt. Eine weitere dritte Funktion der Feinzerkleinerungsstufe besteht nämlich darin, die Kunststoffpartikel beim Zerfasern derartig zu drellen, daß die an den Partikeln anhaftenden Lackreste abspringen. Wegen der hohen Reißdehnung der elastomermodifizierten Kunststoffmaterialien auf Polypropylenbasis (die Reißdehnung der Kunststoffmaterialien kann im allgemeinen mit einigen hundert Prozent angegeben werden) und des relativ hohen Unterschieds zur Reißdehnung der Lackpartikel (Die Reißdehnung der üblicherweise verwendeten Deck-Lacke liegt bei ca. 100 - 150 %, während die Reißdehnung der Grundierung deutlich geringer ist, so daß man mit Werten für die Reißdehnung des Lackmaterials zwischen 50 und 200 % operieren kann), können die Lackpartikel die Dehnung der Kunststoffteilchen, wenn überhaupt nur teilweise mitmachen, und sie platzen ab. Es liegt also nach Durchlaufen der Feinzerkleinerungsstufe ein Gemisch von relativ unregelmäßigen Kunststoffmaterialfasern und von abgeplatzten Lackteilchen vor.

Falls nach einem ersten Durchlaufen des Feinzerkleinerungsaggregats noch nicht die erforderliche Fasergröße erreicht wurde und falls auch noch in zu hohem Maße Lack an den Fasern anhaftet, kann es von Vorteil sein, wenn das einmal zerfaserte Materialgemisch nach der ersten Passage des Mahlaggregats einer Siebung unterzogen wird und gegebenenfalls von der erwünschten Größe abweichendes Material demselben Mahlaggregat zu einer erneuten Zerfaserung zugeführt wird.

Zur zerfasernden Mahlung kann im Prinzip jedes in der Praxis bekannte Aggregat verwendet werden, welches diese Art der Materialbehandlung zuläßt. Insbesondere von Vorteil ist jedoch der Einsatz von Mühlen mit Prallwirkung, bei denen auf das Gut eine Prallwirkung ausgeübt wird. Hierzu gehören insbesondere die bekannten Prallmühlen bzw. Pralltellermühlen, wobei erfindungsgemäß insbesondere letztere als Mahlaggregat bevorzugt zur selektiven Zerkleinerung verwendet werden.

Bei Verwendung dieses Aggregats zur Feinzerkleinerung ist es ausgesprochen zweckmäßig, dem Aggregat zum feinen Zerkleinern der groben Partikel Wasser zuzusetzen. Das in fast allen lackierten Kunststoffteilen als homopolymeres oder in Form seiner Copolymeren oder in Form von mechanischen Blends vorhandene Polypropylen verfügt nämlich über eine hohe Energieabsorption, so daß es bei Trockenmahlung zum Aufschmelzen des Kunststoffs kommen kann, weil Temperaturen oberhalb des Schmelzbereichs erreicht werden. Im geschmolzenen Zustand jedoch wirken das Polypropylen und gegebenenfalls auch andere aufgeschmolzene thermoplastische Kunststoffe als Schmiermittel, wodurch eine zerfasernde Zerkleinerung stark erschwert würde.

Nach erfolgtem Zerfasern und Drellen der Kunststoffpartikel ist das Gemisch von Kunststoffmaterialfasern und von abgeplatzten Lackteilchen zur weiteren Aufbereitung einer Trenn- bzw. Separationsstufe zuzuführen. Diese arbeitet im allgemeinen auf Basis von Dichteunterschieden und/oder Partikelgröße oder -gewicht. In einer erfindungsgemäßen Variante ist es beispielsweise bevorzugt, die resultierenden Kunststoff- und Lackpartikel zur Trennung einer Windsichtung in einem Zyklon zu unterwerfen.

Eine andere besonders zweckmäßige Variante der Trennung sieht eine Siebung des Gemischs zur Klassierung der Teilchen vor, beispielsweise mittels eines Rüttelsiebs.

In noch einer weiteren erfindungsgemäßen Variante kann es auch vorteilhaft sein, die resultierenden Kunststoff- und Lackpartikel einer Separation in einer Schwimmsinkanlage oder einem Hydrozyklon zu unterziehen. Bei der Wassertrennung kann man sich vorteilhaft den Umstand zunutze machen, daß die resultierenden Kunststoffteilchen üblicherweise eine geringere Dichte aufweisen als Wasser, wohingegen die üblicherweise mit Füllstoffen wie Kreide gefüllten Lackteilchen im allgemeinen erheblich schwerer als Wasser sind. Infolgedessen sinken die Lackteilchen bei der Wassertrennung ab und können als Sinkstoff ausgeschlämmt werden. Die auf dem Wasser schwimmenden Polymerpartikel jedoch können als Flotte abgeschöpft, gesammelt und der Weiterverarbeitung zugeführt werden.

Generell können die abgeschöpften Polymerpartikel sofort mittels jeder der üblichen Methoden konfektioniert und weiterverarbeitet werden. Im Rahmen der Erfindung ist es allerdings bevorzugt, die abgetrennten Kunststoffasern aufgrund des Umstands, daß die Fasern ein sehr niedriges Schüttgewicht haben und durch die relativ große Oberfläche viel Wasser anhaften haben, in einem Konfektionierprozeß zu granulieren. Dazu werden sie vorteilhaft in einen Extruder überführt, mittels Vakuum vom anhaftenden Wasser befreit und anschließend granuliert.

Das erhaltene Granulat verfügt über hervorragende Wiederverarbeitungseigenschaften. Es kann entweder unverschnitten oder als Zusatz zu anderen Formmassen in allen für die Verarbeitung von Formmassen geeigneten Verarbeitungsprozessen von Nutzen sein. Das recycelte Granulat kann beispielsweise gut mit allen für die Kunststoffverarbeitung üblichen Apparaturen wie Walzen, Mischern, Extrudern, Knetern etc. weiterverarbeitet werden. Es eignet sich aber auch hervorragend für das Spritzgießverfahren.

Entsprechend der Zusammensetzung der gebrauchten Kunststoffteile lassen sich nach dem erfindungsgemäßen Verfahren zweckmäßig alle thermoplastischen Formteile, die lackiert sind, in hoher Ausbeute zu einem Recyclingprodukt verarbeiten. Bevorzugt anwendbar ist das erfindungsgemäße Verfahren allerdings auf gebrauchte lackierte Formteile, die im wesentlichen Polypropylen und/oder Polyethylen und/oder Ethylen-Propylen-Mischpolymerisat (EPM) und/oder Ethylen-Propylen-Dien-Mischpolymerisat (EPDM) enthalten, so daß ein aufbereitetes Kunststoffprodukt erhalten wird, das im wesentlichen dieselben vorgenannten Substanzen aufweist. Ebenso wird das Verfahren in der Regel auch durch die üblicherweise in den Formmassen auf thermoplastischer Basis enthaltenen Additive im wesentlichen nicht gestört. So erhält man bevorzugt entsprechend den im gebrauchten zu recycelnden Altteil vorhandenen Additiven ein Zusätze wie Farbmittel, Gleitmittel, Füllstoffe, Antioxidantien, UV-Stabilisatoren, Flammschutzmittel und/oder anorganische Fasern aufweisendes aufbereitetes Kunststoffprodukt.

In bevorzugter Ausführungsform werden die nach einem erfindungsgemäßen Verfahren aus gebrauchten Formteilen, insbesondere alten lackierten Stoßfängern, aufbereiteten Kunststoffprodukte zur Herstellung von neuen Stoßfängern für Automobile verwendet, wobei bei einem 20 %igen Anteil von erfindungsgemäßem Recyclat im wesentlichen kein Abfall in der Reißdehnung, in der Schlagzähigkeit und der Kälteschlagzähigkeit eintritt und wobei gleichzeitig bei gegebenenfalls erneutem Lackieren der recycelten thermoplastischen Formteile im wesentlichen keine störenden Oberflächenveränderungen beim geformten Teil auftreten.

Ein mit dem erfindungsgemäßen Verfahren hergestelltes thermoplastisches Kunststoffrecyclat weist eine Reißdehnung von mehr als 50 %, bis zu mehr als 100 % auf. Ein auf die beschriebene Weise gewonnenes Recyclat zeichnet sich durch einen äußerst geringen Anteil von Restlackpartikel im Recyclat aus. Daraus resultieren die vorstehend erwähnten positiven Eigenschaften und insbesondere ein äußerst geringer Abfall im Vergleich zu neuen Formmassen.

Das erfindungsgemäße thermoplastische Kunststoffrecyclat läßt sich insbesondere durch die in ihm enthaltenen Restlackpartikel charakterisieren. Je kleiner und geringer die in einem bestimmten Prüfkörper vorhandene Anzahl an Restlackpartikeln ist, desto besser sind im allgemeinen die angesprochenen kritischen Eigenschaften des Recyclats.

Die Qualität des Recyclats wird deshalb mittels eines Folientests untersucht. Hierzu wird eine bestimmte Menge (ca. 0,2 g) des zu prüfenden Recyclates mit einer Analysenwaage abgewogen. Die abgewogene Probenmenge wird dann zwischen zwei Alufolien in einer bis ca. 300°C beheizbaren Laborpresse mit polierten Preßplatten bei einer Temperatur von ca. 200°C eine Minute lang zu einer Folie mit einer Wandstärke von ca. 0,03 - 0,04 mm und einem Durchmesser von 30 mm verpreßt. Danach wird die Folie ca. 30 min lang abgekühlt. Anschließend wird die hergestellte Folie auf einem Lichttisch begutachtet und die Einschlüsse werden bewertet.

Nach der vorher beschriebenen Folientestmethode sind im erfindungsgemäßen Recyclat in einer Folie von 0,03 -0,04 mm Dicke auf dem Lichttisch auf einer Fläche von 30 mm Durchmesser keine Einschlüße von Lackpartikel herrührend nachweisbar, die größer als 0,25 mm² sind. Das Recyclat wird insgesamt für gut befunden, wenn von 5 nach obigem Folientestverfahren hergestellten Probekörpern 3 Probekörper erkennbare Einschlüsse von 0,1 - 0,25 mm² aufweisen und kein Probekörper Einschlüsse von > 0,25mm² aufweist. Diese Bedingung wurde bei allen Testläufen erfüllt.

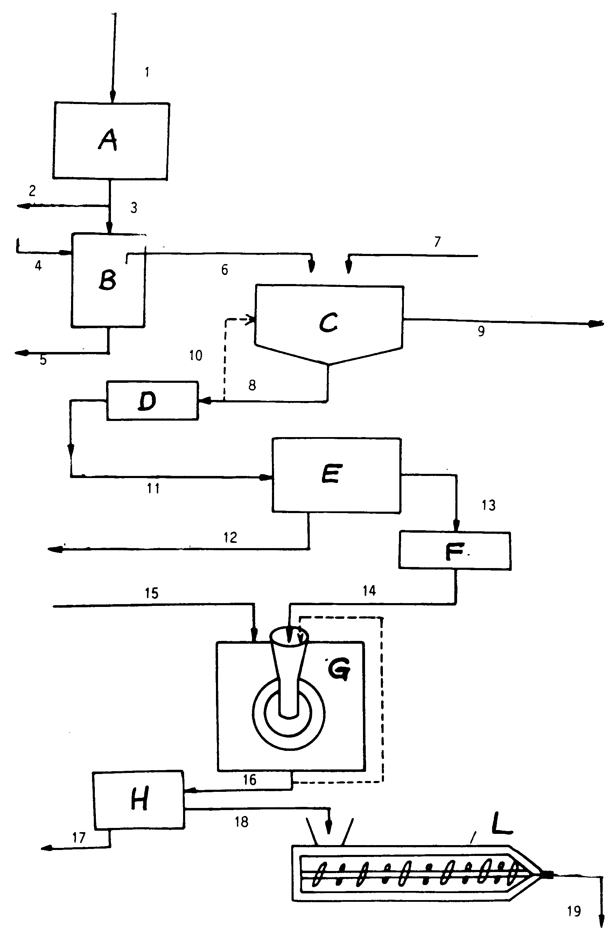

Unter Bezugnahme auf die beigefügte Zeichnung wird im folgenden eine Verfahrensmodifikation des erfindungsgemäßen Verfahrens zur Herstellung eines aufbereiteten Kunststoffprodukts beschrieben.

Die Figur zeigt diagrammartig eine schematische Darstellung des erfindungsgemäßen Verfahrensablaufs.

Lackierte Kunststoffteile 1 werden samt aller vorhandenen daran befestigten Fremdstoffe, beispielsweise Halterungen, Lampen etc., in den Vorshredder A überführt. Metallanteile 2 können hinter dem Vorshredder A abgezogen werden. Hier wird mittels rotierender gegenläufiger Messer eine Zerkleinerung zu handtellergroßen Teilen erreicht. Die vorgeshredderten Chips 3 werden einer ersten Grobtrennung in einer Schwimm-Sink-Anlage B unterzogen. Aufgrund von Dichteunterschieden wird mittels des zugeführten Wassers 4 eine Trennung der Chips in eine Sink- und eine Schwimmfraktion bewirkt. Die Sinkfraktion 5, die im wesentlichen aus Metallen besteht, wird abgezogen und anderweitig weiter aufbereitet. Die Schwimmfraktion 6, die vorzugsweise aus kunststoffreichem Material besteht, wird beispielsweise mit einer Förderschnecke abgezogen und zur Weiterverarbeitung einer Grobnaßmühle C zugeführt. Unter Beifügung von Wasser 7 werden die handtellergroßen Chips der Gutfraktion zu einem Mahlgut 8 von ca. 6 bis 8 mm zerkleinert. Gleichzeitig werden weitere Verunreinigungen, Etiketten etc. 9, in der Grobnaßmühle beseitigt, und die nasse Mahlung bewirkt vorteilhaft einen Kühleffekt und trägt zur Staubreduzierung bei. Teile 8 der Gutfraktion können wahlweise erneut zur Grobnaßmühle C rückgeführt werden, um gegebenenfalls von den Vorgaben abweichende Anteile der Gutfraktion, beispielsweise nach einer Siebung, erneut aufzumahlen. Der feuchte Gutstrom 8 aus der Grobnaßmühle C wird in einen Zentrifugaltrockner D überführt, und nach ihrer Trocknung gelangt die Gutfraktion 11 zur weiteren Auftrennung in einen Hydrozyklon E. Unter Verwirbelung in Wasser wird eine Dichtetrennung der Gutfraktion durchgeführt. Alle Stoffe mit Dichten > 1, beispielsweise Polyamide, ABS-Kunststoffe etc. 12, werden verworfen, wohingegen alle Stoffe mit einer Dichte < 1 einer Gutfraktion 13 angehören, die in einen mechanischen Trockner F überführt wird. Nach Trocknung im mechanischen Trockner F wird die Gutfraktion 14 in einer Pralltellermühle G naß zerfasernd zerkleinert. Bei der Pralltellermühle G handelt es sich um eine Zerkleinerungsaggregat mit in einem konischen Gehäuse rotierenden Schleuderrad mit radial angeordneten Leisten zwischen zwei Pralltellern. Ein Prallteller rotiert gegenläufig zum Schleuderrad, während der andere Prallteller feststeht. Das Mahlgut wird durch den festen Prallteller axial aufgegeben, zwischen Schleuderrad und Pralltellern zerfasernd zerkleinert und durch einen Spalt zwischen den beiden Pralltellern an der Peripherie ausgetragen. Die anfallende Gutfraktion 16 von einer durchschnittlichen Faserlänge von 1 bis 3 mm und einer Faserdicke von ca. 0,1 mm wird abschließend einer Klassierung mittels eines Rüttelsiebs H unterzogen. Im Rüttelsieb H wird der in der Prallmühle 70 abgelöste Lack ausgesiebt und entfernt 17. Die vom Lack befreite Gutfraktion 18 wird zur Weiterverarbeitung einem Vakuumgranulierextruder L zugeführt, so daß ein Recyclat in Form eines Granulats 19 erhalten wird, das bevorzugt nur äußerst geringe Qualitätseinbußen, verursacht durch sehr geringe Lackpartikelrückstände, besitzt.

Weitere Ausführungsformen und Vorzüge des erfindungsgemäßen Verfahrens werden aus den nachfolgenden Patentansprüchen ersichtlich.

### Bezugszeichenliste

- A: Grobshredder
- B: Grobtrennanlage (schwimm-Sink-Anlage)
- C: Grobnaßmühle
- D: Zentrifugaltrockner
- E: Hydrozyklon
- F: mechanischer Trockner
- G: Pralltellermühle
- H: Rüttelsieb
- L: Granulierextruder

## Patentansprüche (Patentansprüche für folgende(n) Vertragsstaat(en): BE, DE, ES, FR, GB, IT, NL, SE)

1. Verfahren zur Wiedergewinnung des Kunststoffes aus lackierten Kunststoffteilen, die insbesondere aus dem Automobilbau stammen, bei dem die lackierten Kunststoffteile zu groben Partikeln vorzerkleinert werden, die groben Partikel zerfasernd fein zerkleinert und während der feinen Zerkleinerung einer simultanen Streck- und Scherbeanspruchung ausgesetzt werden, wobei durch die Verformung der Kunststoffpartikel der anhaftende Lack losgelöst wird, wonach die resultierenden fein zerkleinerten Kunststoffasern und Lackpartikel einer Separation in einer Schwimm-Sink-Anlage oder einem Hydrozyklon unterzogen werden.

2. Verfahren nach Anspruch 1, dadurch gekennzeichnet, daß die groben Partikel so zerkleinert werden, daß ein fein zerkleinertes Kunststoffasermaterial mit einer mittleren Faserdimension von zwischen 0,5 mm und 6 mm Länge und 0,005 bis 0,5 mm Dicke, bevorzugt von 1 bis 3 mm Länge und ca. 0,1 mm Dicke erhalten wird.

3. Verfahren nach einem der vorhergehenden Ansprüche, dadurch gekennzeichnet, daß die feine Zerkleinerung der groben Partikel im Spalt zwischen einer rotierenden und einer stehenden Mahlscheibe eines Mahlaggregats, das zur Erzeugung ausreichender Scherkräfte ausgebildet ist, durchgeführt wird, wobei die Partikel bei der Passage des Spaltes gleichzeitig gewalkt und die an den Kunststoffpartikeln anhaftenden Lackteilchen zum Abplatzen gebracht werden.

4. Verfahren nach einem der vorhergehenden Ansprüche, dadurch gekennzeichnet, daß das fein zerkleinerte Kunststoffasermaterial nach der ersten Passage des Mahlaggregats einer Siebung unterzogen wird und gegebenenfalls von der erwünschten Größe abweichendes Material demselben Mahlaggregat zu einer erneuten Zerkleinerung zugeführt wird.

5. Verfahren nach einem der vorhergehenden Ansprüche, dadurch gekennzeichnet, daß naß fein zerkleinert wird.

6. Verfahren nach einem der vorhergehenden Ansprüche, dadurch gekennzeichnet, daß die lackierten Kunststoffteile samt gegebenenfalls metallischen Anteilen vor dem groben Zerkleinern in einer Shredderschneidmühle zu ungefähr handtellergroßen Chips vorgeshreddert werden und daß die erhaltene Shredderfraktion einer Grobtrennung zur Abtrennung einer gegebenenfalls vorhandenen metallischen Fraktion unterzogen wird.

7. Verfahren nach einen, der vorhergehenden Ansprüche, dadurch gekennzeichnet, daß die lackierten Kunststoffteile auf eine mittlere Partikelgröße von 4 bis 12 mm, vorzugsweise 6 bis 8 mm, grob zerkleinert werden.

8. Verfahren nach einem der vorhergehenden Ansprüche, dadurch gekennzeichnet, daß die lackierten Kunststoffteile zu groben Partikeln schneidend gemahlen werden.

9. Verfahren nach Anspruch 8, dadurch gekennzeichnet, daß naß schneidend gemahlen wird.

10. Verfahren nach Anspruch 9, dadurch gekennzeichnet, daß die groben Partikel aus dem Gutstrom der Naßmahlung in einem Hydrozyklon einer Dichtetrennung unterzogen werden, wobei alle Sinkstoffe mit einer Dichte von > 1 ausgeschlämmt werden.

11. Verfahren nach einem der vorhergehenden Ansprüche, dadurch gekennzeichnet, daß die separierten Kunststoffpartikel in einen Extruder überführt, mittels Vakuum vom anhaftenden Wasser befreit und granuliert werden.

12. Verwendung von nach dem Verfahren gemäß einem der vorhergehenden Ansprüche wiedergewonnenen Kunststoffpartikeln zur Herstellung von Stoßfängern für Automobile.

## Patentansprüche (Patentansprüche für folgende(n) Vertragsstaat(en): AT, CH, LI, PT)

1. Verfahren zur Wiedergewinnung des Kunststoffes aus lackierten Kunststoffteilen, die insbesondere aus dem Automobilbau stammen, bei dem die lackierten Kunststoffteile zu groben Partikeln vorzerkleinert werden, die groben Partikel fein zerkleinert und während der feinen Zerkleinerung einer simultanen Streck- und Scherbeanspruchung ausgesetzt werden, wobei durch die Verformung der Kunststoffpartikel der anhaftende Lack losgelöst wird, wonach die resultierenden Kunststoff- und Lackpartikel separiert werden.

2. Verfahren nach Anspruch 1, dadurch gekennzeichnet, daß die groben Partikel zerfasernd fein zerkleinert werden.

3. Verfahren nach Anspruch 1 oder 2, dadurch gekennzeichnet, daß die groben Partikel so zerkleinert werden, daß ein fein zerkleinertes Kunststoffasermaterial mit einer mittleren Faserdimension von zwischen 0,5 mm und 6 mm Länge und 0,005 bis 0,5 mm Dicke, bevorzugt von 1 bis 3 mm Länge und ca. 0,1 mm Dicke erhalten wird.

4. Verfahren nach einem der vorhergehenden Ansprüche, dadurch gekennzeichnet, daß die feine Zerkleinerung der groben Partikel im Spalt zwischen einer rotierenden und einer stehenden Mahlscheibe eines Mahlaggregats, das zur Erzeugung ausreichender Scherkräfte ausgebildet ist, durchgeführt wird, wobei die Partikel bei der Passage des Spaltes gleichzeitig gewalkt und die an den Kunststoffpartikeln anhaftenden Lackteilchen zum Abplatzen gebracht werden.

5. Verfahren nach einem der vorhergehenden Ansprüche, dadurch gekennzeichnet, daß das fein zerkleinerte Kunststoffasermaterial nach der ersten Passage des Mahlaggregats einer Siebung unterzogen wird und gegebenenfalls von der erwünschten Größe abweichendes Material demselben Mahlaggregat zu einer erneuten Zerkleinerung zugeführt wird.

6. Verfahren nach einem der vorhergehenden Ansprüche, dadurch gekennzeichnet, daß naß fein zerkleinert wird.

7. Verfahren nach einem der vorhergehenden Ansprüche, dadurch gekennzeichnet, daß die lackierten Kunststoffteile samt gegebenenfalls metallischen Anteilen vor dem groben Zerkleinern in einer Shredderschneidmühle zu ungefähr handtellergroßen Chips vorgeshreddert werden und daß die erhaltene Shredderfraktion einer Grobtrennung zur Abtrennung einer gegebenenfalls vorhandenen metallischen Fraktion unterzogen wird.

8. Verfahren nach einem der vorhergehenden Ansprüche, dadurch gekennzeichnet, daß die lackierten Kunststoffteile auf eine mittlere Partikelgröße von 4 bis 12 mm, vorzugsweise 6 bis 8 mm, grob zerkleinert werden.

9. Verfahren nach einem der vorhergehenden Ansprüche, dadurch gekennzeichnet, daß die lackierten Kunststoffteile zu groben Partikeln schneidend gemahlen werden.

10. Verfahren nach Anspruch 9, dadurch gekennzeichnet, daß naß schneidend gemahlen wird.

11. Verfahren nach Anspruch 10, dadurch gekennzeichnet, daß die groben Partikel aus dem Gutstrom der Naßmahlung in einem Hydrozyklon einer Dichtetrennung unterzogen werden, wobei alle Sinkstoffe mit einer Dichte von > 1 ausgeschlämmt werden.

12. Verfahren nach einem der Ansprüche 1 bis 11, dadurch gekennzeichnet, daß die fein zerkleinerten Kunststoffasern und Lackpartikel zur Trennung mittels eines Rüttelsiebs klassiert werden.

13. Verfahren nach einem der Ansprüche 1 bis 11, dadurch gekennzeichnet, daß die fein zerkleinerten Kunststoffasern und Lackpartikel zur Trennung einer Windsichtung in einem Zyklon unterzogen werden.

14. Verfahren nach einem der Ansprüche 1 bis 11, dadurch gekennzeichnet, daß die fein zerkleinerten Kunststoffasern und Lackpartikel einer Separation in einer Schwimm-Sink-Anlage oder einem Hydrozyklon unterzogen werden.

15. Verfahren nach einem der vorhergehenden Ansprüche, dadurch gekennzeichnet, daß die separierten Kunststoffpartikel in einen Extruder überführt, mittels Vakuum vom anhaftenden Wasser befreit und granuliert werden.

16. Verwendung von nach dem Verfahren gemäß einem der vorhergehenden Ansprüche wiedergewonnenen Kunststoffpartikeln zur Herstellung von Stoßfängern für Automobile.

## Claims (Claims for the following Contracting State(s): BE, DE, ES, FR, GB, IT, NL, SE)

1. Process for recovery of plastic material in painted plastic material components, in particular from automobile manufacturing, in which the painted plastic components are pre-reduced into coarse particles, the coarse particles are fine-reduced and defibrated and during fine-reduction subjected to a simultaneous pull and shear stress in which the deformation of the plastic particles severs adhering paint, whereafter thus resulting fine-reduced plastic material fibres and paint particles are subjected to a separation in a float/sink plant or in a hydrocyclone.

2. Process according to Claim 1, **characterised in that** the coarse particles are reduced in such a manner that a fine-reduced plastic material fibre material with a mean fibre dimension between 0.5 mm and 6 mm length and between 0.005 and 0.5 mm thickness, preferably between 1 and 3 mm length and approximately 0.1 mm thickness, is obtained.

3. Process according to one of the above claims, **characterised in that** the fine-reduction of the coarse particles is carried out in a gap between a rotating and a stationary grinding disc of a grinding unit which is designed to produce sufficient shearing forces, and the particles are, whilst passing the gap, simultaneously flexed and paint particles adhering to the plastic material particles are made to break off.

4. Process according to one of the above claims, **characterised in that** fine-reduced plastic fibre material is, after the first passage of the grinding unit, subjected to sieving and, if appropriate, material outside a desired dimension is delivered to the same grinding unit for renewed reduction.

5. Process according to one of the above claims, **characterised in that** fine-reduction is carried out wet.

6. Process according to one of the above claims, **characterised in that** the painted plastic material parts including, if appropriate, metallic portions are, prior to coarse reduction, pre-shredded in a shredding cutter mill to approximately hand-palm sized chips, and the obtained shredder fraction is subjected to a coarse separation for the purpose of severing a possibly present metal fraction.

7. Process according to one of the above claims, **characterised in that** the painted plastic material parts are coarse-reduced to a mean particle size of between 4 and 12 mm, preferably between 6 to 8 mm.

8. Process according to one of the above claims, **characterised in that** the painted plastic material parts are cut-ground into coarse particles.

9. Process according to Claim 8, **characterised in that** cut-grinding is performed wet.

10. Process according to Claim 9, **characterised in that** the coarse particles of a goods flow of wet grinding are in a hydro- cyclone subjected to a density separation in which all sediments are elutriated with a density of > 1.

11. Process according to one of the above claims, **characterised in that** the separated plastic material particles are transferred into an extruder, freed of adhering water by means of vacuum and granulated.

12. Use of plastic material particles recovered in the process according to one of the above claims for the manufacture of bumpers for motor cars.

## Claims (Claims for the following Contracting State(s): AT, CH, LI, PT)

1. Process for recovery of plastic material in painted plastic material components, in particular from automobile manufacturing, in which the painted plastic components are pre-reduced into coarse particles, the coarse particles are fine-reduced and during fine-reduction subjected to a simultaneous pull and shear stress in which the deformation of the plastic particles severs adhering paint, whereafter thus resulting plastic material and paint particles are separated.

2. Process according to Claim 1, **characterised in that** the coarse particles are fine-reduced by defibration.

3. Process according to Claim 1 or 2, **characterised in that** the coarse particles are reduced in such a manner that a fine-reduced plastic material fibre material with a mean fibre dimension between 0.5 mm and 6 mm length and between 0.005 and 0.5 mm thickness, preferably between 1 and 3 mm length and approximately 0.1 mm thickness, is obtained.

4. Process according to one of the above claims, **characterised in that** the fine-reduction of the coarse particles is carried out in a gap between a rotating and a stationary grinding disc of a grinding unit which is designed to produce sufficient shearing forces, and the particles are, whilst passing the gap, simultaneously flexed and paint particles adhering to the plastic material particles are made to break off.

5. Process according to one of the above claims, **characterised in that** fine-reduced plastic fibre material is, after the first passage of the grinding unit, subjected to sieving and, if appropriate, material outside a desired dimension is delivered to the same grinding unit for renewed reduction.

6. Process according to one of the above claims, **characterised in that** fine-reduction is carried out wet.

7. Process according to one of the above claims, **characterised in that** the painted plastic material parts including, if appropriate, metallic portions are, prior to coarse reduction, pre-shredded in a shredding cutter mill to approximately hand-palm sized chips, and the obtained shredder fraction is subjected to a coarse separation for the purpose of severing a possibly present metal fraction.

8. Process according to one of the above claims, **characterised in that** the painted plastic material parts are coarse-reduced to a mean particle size of between 4 and 12 mm, preferably between 6 to 8 mm.

9. Process according to one of the above claims, **characterised in that** the painted plastic material parts are cut-ground into coarse particles.

10. Process according to Claim 9, **characterised in that** cut-grinding is performed wet.

11. Process according to Claim 10, **characterised in that** the coarse particles of a goods flow of wet grinding are in a hydrocyclone subjected to a density separation in which all sediments are elutriated with a density of > 1.

12. Process according to one of Claims 1 to 11, **characterised in that** fine-reduced plastic material fibres and paint particles are classified for separation by means of a vibrating sieve.

13. Process according to one of Claims 1 to 11, **characterised in that** fine-reduced plastic material fibres and paint particles are, for the purpose of separation, subjected to wind sieving in a cyclone.

14. Process according to one of Claims 1 to 11, **characterised in that** fine-reduced plastic material fibres and paint particles are subjected to a separation in a float/sink plant or a hydrocyclone.

15. Process according to one of the above claims, **characterised in that** the separated plastic material particles are transferred into an extruder, freed of adhering water by means of vacuum and granulated.

16. Use of plastic material particles recovered in the process according to one of the above claims for the manufacture of bumpers for motor cars.

## Revendications (Revendications pour l'(les) Etat(s) contractant(s) suivant(s): BE, DE, ES, FR, GB, IT, NL, SE)

1. Procédé de récupération de matière plastique à partir de pièces de matières plastiques revêtues, provenant notamment de l'industrie automobile, dans lequel les pièces de matière plastique revêtue sont soumises à un broyage préalable en particules grossières, les particules grossières sont finement broyées et sont, pendant le broyage fin, soumises à des contraintes simultanées d'extension et de cisaillement, et la déformation des particules de matière plastique provoque alors le détachement du revêtement qui y adhérait, ce après quoi les fibres de matière plastique et les particules de revêtement finement broyées ainsi obtenues sont soumises à une séparation dans une installation de flottation-décantation ou dans un hydrocyclone.

2. Procédé selon la revendication 1, caractérisé en ce que les particules grossières sont broyées de façon à ce que l'on obtienne une matière plastique finement broyée en fibres d'une dimension moyenne de fibres de 0,5 à 6 mm de longueur et de 0,005 a' 0,5 mm d'épaisseur, de préférence de 1 à 3 mm de longueur et environ 0,1 mm d'épaisseur.

3. Le procédé selon l'une quelconque des revendications précédentes, caractérisé en ce que le broyage fin des particules grossières est effectué dans un espace intercalaire situé entre un disque broyeur rotatif et un disque broyeur fixe d'une machine à broyer conçue pour permettre l'obtention de forces de cisaillement suffisantes si bien que, dans le même temps, les particules sont foulées par leur passage dans cet espace intercalaire et les particules de revêtement adhérant à la matière plastique sont écaillées.

4. Procédé selon l'une quelconque des revendications précédentes. caractérisé en ce que la matière plastique en fibres finement broyée est soumise à un tamisage après le premier passage dans la machine à broyer et, le cas échéant, la matière s'écartant des dimensions souhaitées est ramenée dans la même machine à broyer pour un nouveau broyage.

5. Procédé selon l'une quelconque des revendications précédentes. caractérisé en ce que le broyage fin est effectué par voie humide.

6. Procédé selon l'une quelconque des revendications précédentes, caractérisé en ce que les particules de matière plastique revêtues ainsi que les éventuels constituants métalliques sont, avant le broyage grossier, hachées au préalable dans une scie, défibreuse en copeaux ayant à peu près la taille de la paume de la main et que la fraction traitée par cette scie ainsi obtenue, est soumise à une séparation grossière pour l'élimination l'éventuelle d'une fraction métallique préexistante.

7. Procédé selon l'une quelconque des revendications précédentes, caractérisé en ce que les particules de matières plastiques revêtues sont grossièrement broyées à une dimension moyenne de particules de 4 à 12 mm, de préférence de 6 à 8 mm.

8. Procédé selon l'une quelconque des revendications précédentes, caractérisé en ce que les particules de matières plastiques revêtues subissent un broyage cisaillant en particules grossières.

9. Procédé selon la revendication 8, caractérisé en ce que le broyage cisaillant est mis eu oeuvre par voie humide.

10. Procédé selon la revendication 9, caractérisé en ce que les particules grossières tirées de la matière issue du broyage par voie humide sont, dans un hydrocyclone, soumises à une séparation par densité conduisant à une extraction de toutes les particules denses en suspension de densité > 1.

11. Procédé selon l'une quelconque des revendications précédentes, caractérisé en ce que les matières plastiques séparées sont introduites dans une extrudeuse, débarrassées, par mise sous vide, de l'eau entraînée, puis granulées

12. Utilisation de particules de matières plastique récupérées par le procédé selon l'une quelconque des revendications précédentes pour la fabrication de pare-chocs pour automobiles.

## Revendications (Revendications pour l'(les) Etat(s) contractant(s) suivant(s): AT, CH, LI, PT)

1. Procédé de récupération de matière plastique à partir de pièces de matières plastiques revêtues, provenant notamment de l'industrie automobile, dans lequel les pièces de matière plastique revêtues sont soumises à un broyage préalable en particules grossières, les particules grossières sont finement broyées et sont, pendant le broyage fin, soumises à des contraintes simultanées d'extension et de cisaillement, et la déformation des particules de matière plastique provoque alors le détachement du revêtement qui y adhérait, ce après quoi les particules de matière plastique et les particules de revêtement ainsi obtenues sont séparées.

2. Procédé selon la revendication 1, caractérisé en ce que les particules grossières sont broyées à une finesse propre à les transformer en fibres.

3. Procédé selon la revendication 1 ou 2, caractérisé en ce que les particules grossières sont broyées de façon à ce que l'on obtienne une matière plastique finement broyée en fibres d'une dimension moyenne de fibres de 0,5 à 6 mm de longeur et de 0,005 à 0,5 mm d'épaisseur, de préférence de 1 à 3 mm de longeur et environ 0,1 mm d'épaisseur.

4. Le procédé selon l'une quelconque des revendications précédentes, caractérisé en ce que le broyage fin des particules grossières est effectué dans un espace intercalaire situé entre un disque broyeur rotatif et un disque broyeur fixe d'une machine à broyer conçue pour permettre l'obtention de forces de cisaillement suffisantes si bien que, dans le même temps, les particules sont foulées par leur passage dans cet espace intercalaire et les particules de revêtement adhérant à la matière plastique sont écaillées.

5. Procédé selon l'une quelconque des revendications précédentes, caractérisé en ce que la matière plastique en fibres finement broyée est soumise à un tamisage après le premier passage dans la machine à broyer et, le cas échéant, la matière s'écartant des dimensions souhaitées est ramenée dans la même machine à broyer pour un nouveau broyage.

6. Procédé selon l'une quelconque des revendications précédentes, caractérisé en ce que le broyage fin est effectué par voie humide.

7. Procédé selon l'une quelconque des revendications précédentes, caractérisé en ce que les particules de matière plastique revêtues ainsi que les éventuels constituants métalliques sont, avant le broyage grossier, hachées au préalable dans une scie défibreuse en copeaux ayant à peu près la taille de la paume de la main et que la fraction traitée par cette scie, ainsi obtenue, est soumise à une séparation grossière pour l'élimination l'éventuelle d'une fraction métallique préexistante.

8. Procédé selon l'une quelconque des revendications précédentes, caractérisé en ce que les particules de matières plastiques revêtues sont grossièrement broyées à une dimension moyenne de particules de 4 à 12 mm, de préférence de 6 à 8 mm.

9. Procédé selon l'une quelconque des revendications précédentes, caractérisé en ce que les particules de matières plastiques revêtues subissent un broyage cisaillant en particules grossières.

10. Procédé selon la revendication 9 caractérisé en ce que le broyage cisaillant est mis en oeuvre par voie humide.

11. Procédé selon la revendication 10, caractérisé en ce que les particules grossières tirées de la matière issue du broyage par voie humide sont, dans un hydrocyclone, soumises à une séparation par densité conduisant à une extraction de toutes les particules denses, en suspension, de densité > 1.

12. Procédé selon l'une quelconque des revendications 1 à 11, caractérisé en ce que les fibres de matière plastique et les particules de revêtements finement broyées sont, pour leur séparation, triées au moyen d'un tamiseur à secousses.

13. Procédé selon l'une quelconque des revendications 1 à 11, caractérisé en ce que les fibres de matière plastique et les particules de revêtements finement broyées sont, pour leur séparation, soumises à un triage pneumatique dans un cyclone.

14. Procédé selon l'une quelconque des revendications 1 à 11, caractérisé en ce que les fibres de matière plastique et les particules de revêtements finement broyées sont soumises à une séparation dans une installation de flottation-décantation ou dans un hydrocyclone.

15. Procédé selon l'une quelconque des revendications précédentes, caractérisé en ce que les matières plastiques séparées sont introduites dans une extrudeuse, débarrassées, par mise sous vide, de l'eau entraînée, puis granulées

16. Utilisation de particules de matières plastique récupérées par le procédé selon l'une quelconque des revendications précédentes pour la fabrication de pare-chocs pour automobiles.
